(19) Europäisches Patentamt
European Patent Office
Office européen des brevets

(11) **EP 2 790 879 B1**

(12) **EUROPÄISCHE PATENTSCHRIFT**

(45) Veröffentlichungstag und Bekanntmachung des Hinweises auf die Patenterteilung:
**06.02.2019 Patentblatt 2019/06**

(21) Anmeldenummer: **12781090.1**

(22) Anmeldetag: **02.11.2012**

(51) Int Cl.:
**B25F 5/00** (2006.01)   **G01V 3/15** (2006.01)

(86) Internationale Anmeldenummer:
**PCT/EP2012/071713**

(87) Internationale Veröffentlichungsnummer:
**WO 2013/087291 (20.06.2013 Gazette 2013/25)**

(54) **HANDWERKZEUGVORRICHTUNG**

HAND TOOL DEVICE

DISPOSITIF OUTIL PORTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2011 DE 102011088438**

(43) Veröffentlichungstag der Anmeldung:
**22.10.2014 Patentblatt 2014/43**

(73) Patentinhaber: **Robert Bosch GmbH**
**70442 Stuttgart (DE)**

(72) Erfinder:
• **SGARZ, Heiko**
**71229 Leonberg (DE)**
• **POHLMANN, Martin**
**70567 Stuttgart (DE)**
• **BROST, Jan-Michael**
**70771 Leinfelden-Echterdingen (DE)**

(56) Entgegenhaltungen:
EP-A2- 1 717 606      EP-A2- 2 196 829
WO-A1-94/27168      DE-A1-102006 061 581
DE-A1-102006 062 492   US-A- 5 854 603
US-B1- 6 211 662

EP 2 790 879 B1

**Beschreibung**

Stand der Technik

Es ist bereits eine Handwerkzeugvorrichtung mit einer Recheneinheit und zumindest einer Ortungsvorrichtung, die dazu vorgesehen ist, zwei orthogonale Polarisationsrichtungen wenigstens eines reflektierten Ortungssignals zumindest zu empfangen, vorgeschlagen worden. Beispiele sind aus der EP1717606A2, DE102006061581A1 oder EP2196829A2 bekannt.

Offenbarung der Erfindung

Die Erfindung, wie im Anspruch 1 dargestellt, geht aus von einer Handwerkzeugvorrichtung mit einer Recheneinheit und zumindest einer Ortungsvorrichtung, die dazu vorgesehen ist, zwei orthogonale Polarisations-richtungen wenigstens eines reflektierten Ortungssig-nals zumindest zu empfangen.

Es wird vorgeschlagen, dass die Recheneinheit dazu vorgesehen ist, eine Ausrichtungsinformation eines länglichen, insbesondere verdeckt angeordneten Ortungsobjekts mittels der zwei empfangenen Polarisationsrichtungen des reflektierten Ortungssignals zu bestimmen. Unter einer "Recheneinheit" soll insbesondere eine Einheit mit einem Informationseingang, einer Informationsverarbeitung und einer Informationsausgabe verstanden werden. Vorzugsweise umfasst der Informationseingang zumindest einen Analog-Digital-Wandler, der bei einem Betrieb den Anteil des Ortungssignals digitalisiert. Vorteilhaft weist die Recheneinheit zumindest einen Prozessor, einen Speicher, Ein- und Ausgabemittel, weitere elektrische Bauteile, ein Betriebsprogramm und/oder zumindest eine Berechnungsroutine auf. Vorzugsweise sind die Bauteile der Recheneinheit auf einer gemeinsamen Platine angeordnet und/oder vorteilhaft in einem gemeinsamen Gehäuse angeordnet. Insbesondere soll unter einer "Ortungsvorrichtung" eine Vorrichtung verstanden werden, die bei einem Betrieb ein Ortungssignal aussendet und einen von dem Ortungsobjekt reflektierten Anteil des Ortungssignals empfängt. Vorteilhaft bestimmt die Ortungsvorrichtung wenigstens, ob sich ein Ortungsobjekt in einem Ortungsbereich der Or-tungsvorrichtung befindet. Besonders vorteilhaft be-stimmt die Ortungsvorrichtung zumindest eine Entfernung zwischen der Ortungsvorrichtung und dem Ortungsobjekt. Vorzugsweise strahlt die Ortungsantenne bei einer differenziellen Anregung zweier gegenüberliegender Speisepunkte ein Ortungssignal mit einer linearen ersten Polarisationsrichtung ab. Vorteilhaft strahlt die Ortungsantenne bei einer differenziellen Anregung zweier anderer gegenüberliegender Speisepunkte ein Ortungssignal mit einer zweiten linearen Polarisationsrichtung ab, die zur ersten Polarisationsrichtung orthogonal ist. Des Weiteren soll unter einem "Ortungssignal" insbesondere ein Signal verstanden werden, das die Ortungsvorrichtung zur Ortung des Ortungsobjekts empfängt. Vorzugsweise sendet die Ortungsvorrichtung das Ortungssignal zur Ortung des Ortungsobjekts. Vorzugsweise weist das Ortungssignal eine Bandbreite von mehr als 500 MHz, vorteilhaft mehr als 1 GHz, besonders vorteilhaft mehr als 2 GHz auf. Alternativ könnte die Ortungsvorrichtung ein schmalbandiges Ortungssignal senden, wodurch eine konstruktiv besonders einfache Ausgestaltung möglich ist. Ferner soll unter "vorgesehen" insbesondere speziell programmiert, ausgelegt und/oder ausgestattet verstanden werden. Insbesondere soll unter einer Polarisationsrichtung eine Ausrichtung eines elektrischen Vektors eines Feldes des Ortungssignals über einen Zeitverlauf verstanden werden. Vorzugsweise ist das Ortungssignal linear polarisiert, dass heißt insbesondere, dass eine Polarisationsrichtung des elektrischen Vektors des Ortungssignals konstant ist. Alternativ könnte das Ortungssignal zirkular polarisiert sein, dass heißt insbesondere, dass sich eine Polarisationsrichtung des elektrischen Vektors des Ortungssignals mit einer Frequenz des Ortungssignals verändert. Unter "orthogona-len Polarisationsrichtungen" sollen insbesondere von-einander unabhängige Polarisationsrichtungen verstan-den werden, und zwar insbesondere Polarisationsrichtungen einer linksdrehenden und eine rechtsdrehenden zirkular Polarisation und/oder vorteilhaft zwei senkrecht zueinander ausgerichteten Polarisationsrichtungen zwei lineare Polarisationen. Unter der Wendung "zwei ortho-gonale Polarisationsrichtungen empfangen" soll insbe-sondere verstanden werden, dass die Ortungsantenne dazu vorgesehen ist, zwei orthogonal polarisierte Teile des Ortungssignals zu empfangen, und vorteilhaft an zu-mindest zwei verschiedenen Speisepunkten auszuge-ben. Alternativ könnte die Ortungsvorrichtung zumindest zwei Ortungsantennen zum Empfang der Polarisationsrichtungen aufweisen. Des Weiteren soll unter einem "Ortungssignal" insbesondere ein Signal verstanden werden, das die Ortungsvorrichtung zur Ortung des Ortungsobjekts aussendet. Vorzugsweise weist das Ortungssignal eine Bandbreite von mehr als 500 MHz, vorteilhaft mehr als 1 GHz, besonders vorteilhaft mehr als 2 GHz auf. Insbesondere soll unter einem "reflektierten Ortungssignal" ein von dem Ortungsobjekt reflektierter und von der Ortungsantenne empfangener Anteil des Ortungssignals verstanden werden. Unter dem Begriff "empfangen" soll insbesondere verstanden werden, dass die Ortungsvorrichtung einen Teil einer Energie des von dem Ortungsobjekt reflektierten Ortungssignals von einer durch einen Isolator und/oder Vakuum ausbreitende elektromagnetische Welle in eine von einem elektrischen Leiter geführte Welle wandelt. Insbesondere soll unter einer "Ausrichtungsinformation" eine Information verstanden werden, die eine Ausrichtung zumindest ei-ner Haupterstreckungsrichtung des Ortungsobjekts zu-mindest in einem Ortungsbereich der Ortungsvorrichtung beschreibt. Vorzugsweise ist die Ausrichtungsinformation als ein Winkel zwischen einer der Polarisationsrichtungen und der Haupterstreckungsrichtung des Ortungsobjekts auf einer Ebene senkrecht zu der Hauptstrahlrichtung der Ortungsvorrichtung ausgebildet. Unter einer "Haupterstreckungsrichtung" soll insbesondere eine Richtung verstanden werden, in der das Ortungsobjekt innerhalb des Ortungsbereichs auf einer Ebene senkrecht zu der Hauptstrahlrichtung eine maximale Erstreckung aufweist. Unter einer "Hauptstrahlrichtung" der Ortungsvorrichtung soll insbesondere eine Richtung verstanden werden, in die die Ortungsvorrichtung bei einem Betrieb gemittelt eine maximale Leistung mit dem Ortungssignal abstrahlt. Vorzugsweise strahlt die Ortungsantenne bei einer differenziellen Anregung zweier gegenüberliegender Speisepunkte ein Ortungssignal mit einem Maximum in der Hauptstrahlrichtung ab. Vorzugsweise ist die Hauptstrahlrichtung senkrecht zu einer Strahlerfläche der Ortungsantenne der Ortungsvorrichtung ausgerichtet. Insbesondere soll unter einem "Ortungsbereich" ein Bereich verstanden werden, in den die Ortungsvorrichtung das Ortungssignal aussendet und aus dem die Ortungsvorrichtung das Ortungssignal empfängt. Vorzugsweise variiert ein Antennengewinn der Ortungsantenne in Richtung des Ortungsbereichs um weniger als 20 dB, besonders bevorzugt weniger als 10 dB. Unter einem "Ortungsobjekt" soll insbesondere ein in einem Werkstück, beispielsweise in einer Wand, verdeckt angeordnetes Bauteil verstanden werden, das sich in zumindest einer elektromagnetischen Eigenschaft von dem Werkstück unterscheidet, beispielsweise eine Stromleitung, eine Wasserleitung, ein Träger und/oder ein Armierungseisen. Insbesondere soll unter einem "länglichen Ortungsobjekt" ein Objekt verstanden werden, das in dem Ortungsbereich auf der Ebene senkrecht zu der Hauptstrahlrichtung ein Verhältnis zwischen Haupterstreckung und einer maximalen Erstreckung senkrecht zu der Haupterstreckung von größer als 2 zu 1, vorteilhaft größer als 3 zu 1, besonders vorteilhaft größer als 4 zu 1 aufweist. Unter einem "verdeckt angeordneten Ortungsobjekt" soll insbesondere ein Objekt verstanden werden, das in einem Werkstück für einen Bediener unsichtbar angeordnet ist. Vorzugsweise ist das Werkstück als eine Wand, eine Decke und/oder als ein anderes, dem Fachmann als sinnvoll erscheinendes Werkstück ausgebildet. Insbesondere soll unter dem Begriff "ermitteln" verstanden werden, dass die Recheneinheit aus zumindest einer Kenngröße des Ortungssignals zumindest die Ausrichtungsinformation des Ortungsobjekts berechnet. Durch die erfindungsgemäße Ausgestaltung der Handwerkzeugvorrichtung kann ein Verlauf eines Ortungsobjekts besonders komfortabel festgestellt und insbesondere verfolgt werden. Insbesondere kann der Bediener direkt erkennen, in welche Richtung er die Handwerkzeugvorrichtung zur Verfolgung des Ortungsobjekts bewegen muss. Des Weiteren kann die Ausrichtungsinformation von einer Tiefe des Ortungsobjekts unabhängig bestimmt werden.

In einer weiteren Ausgestaltung wird vorgeschlagen, dass die Recheneinheit dazu vorgesehen ist, die Ausrichtungsinformation aus zumindest einem Kreuzpolarisationsparameter zu bestimmen, wodurch eine konstruktiv einfache Berechnung der Ausrichtungsinformation möglich ist. Unter einem "Kreuzpolarisationsparameter" soll insbesondere ein Streuparameter verstanden werden, der zumindest eine, von dem Ortungsobjekt verursachte, Änderung der Polarisationsrichtung des Ortungssignals beschreibt. Bevorzugt bestimmt die Recheneinheit den Kreuzpolarisationsparameter durch einen Vergleich des mit einer ersten Polarisationsrichtung gesendeten Ortungssignals und einer empfangenen Reflexion des Ortungssignals, die eine zu der ersten Polarisationsrichtung orthogonale zweite Polarisationsrichtung aufweist. Unter einem "Streuparameter" soll insbesondere eine Beschreibung einer Reflektion des Ortungssignals an dem Ortungsobjekt verstanden werden, die zumindest Informationen über eine Amplitude und einen Phasenwinkel des reflektierten Anteils des Ortungssignals umfasst. Vorzugsweise beschreibt der Streuparameter einen Unterschied zwischen dem gesendeten Ortungssignal und dem reflektierten Anteil des Ortungssignals, und zwar insbesondere als komplexer Wert. Insbesondere bestimmt die Recheneinheit einen Streuparameter, indem sie ein gesendetes Ortungssignal und empfangene Anteile des Ortungssignals komplex vergleicht.

Des Weiteren wird vorgeschlagen, dass die Recheneinheit dazu vorgesehen ist, einen Summenkreuzpolarisationsparameter aus Kreuzpolarisationsparametern der zwei orthogonalen Polarisationsrichtungen des reflektierten Ortungssignals zu bestimmen, wodurch eine vorteilhaft einfache Berechnung des Summenkreuzpolarisationsparameters erreicht werden kann. Unter einem "Summenkreuzpolarisationsparameter" soll insbesondere ein Streuparameter verstanden werden, der eine von dem Ortungsobjekt verursachte Änderung der Polarisationsrichtung des Ortungssignals in beide Polarisationsrichtungen beschreibt.

Zudem wird vorgeschlagen, dass die Recheneinheit dazu vorgesehen ist, Ausrichtungsinformationen aus zumindest einem Copolarisationsparameter des reflektierten Ortungssignals zu bestimmen, wodurch eine besonders vorteilhafte Berechnung möglich ist. Insbesondere soll unter einem "Copolarisationsparameter" ein Streuparameter verstanden werden, der zumindest eine Reflektion an dem Ortungsobjekt ohne eine Änderung der Polarisationsrichtung beschreibt. Bevorzugt bestimmt die Recheneinheit den Copolarisationsparameter durch einen Vergleich des mit einer Polarisationsrichtung gesendeten Ortungssignals und einer mit einer gleichen Polarisationsrichtung empfangenen Reflexion des Ortungssignals.

Ferner wird vorgeschlagen, dass die Recheneinheit dazu vorgesehen ist, einen winkelverschobenen Summenkreuzpolarisationsparameter aus den Copolarisationsparametern der zwei Polarisationsrichtungen des reflektierten Ortungssignals zu bestimmen. Unter einem "winkelverschobenen Summenkreuzpolarisationsparameter" soll insbesondere ein Summenkreuzpolarisationsparameter verstanden werden, der einem im Winkel unverschobenen Summenkreuzpolarisationsparameter entspricht, bei dem die Handwerkzeugvorrichtung um einen Winkel, vorzugsweise 45 Grad, um eine Hauptstrahlrichtung relativ zu dem Ortungsobjekt gedreht ist. Vorzugsweise berechnet die Recheneinheit den winkelverschobenen Summenkreuzpolarisationsparameter. Durch diese Ausgestaltung ist eine einfache und besonders genaue Berechnung der Ausrichtungsinformation möglich.

Weiterhin wird vorgeschlagen, dass die Recheneinheit dazu vorgesehen ist, die Ausrichtungsinformation aus einem Betrag des Summenkreuzpolarisationsparameter und einem Betrag des winkelverschobenen Summenkreuzpolarisationsparameter zu bestimmen, wodurch Toleranzen vorteilhaft ausgeglichen werden können. Unter einem "Betrag" soll insbesondere ein maximaler reeller Wert des komplexen Summenkreuzpolarisationsparameters, das heißt insbesondere eine Länge des Zeigers des komplexen Summenkreuzpolarisationsparameters, verstanden werden.

In einer weiteren Ausgestaltung wird vorgeschlagen, dass die Recheneinheit dazu vorgesehen ist, die Ausrichtungsinformation mittels einer Winkelfunktion insbesondere einer Arcustangensfunktion aus dem Summenkreuzpolarisationsparameter und dem winkelverschobenen Summenkreuzpolarisationsparameter zu bestimmen, wodurch mit wenig Rechenaufwand und konstruktiv einfach eine genaue Berechnung der Ausrichtungsinformation möglich ist.

Des Weiteren wird vorgeschlagen, dass die Recheneinheit dazu vorgesehen ist, eine Mehrdeutigkeit der Bestimmung der Ausrichtungsinformation mittels wenigstens eines Copolarisationsparameters zumindest zu reduzieren, wodurch mit einer einfachen Berechnung eine vorteilhafte und insbesondere eindeutige Ausgabe der Ausrichtungsinformation möglich ist. Unter einer "Mehrdeutigkeit zumindest reduzieren" soll insbesondere verstanden werden, dass eine Berechnung der Ausrichtungsinformation mehrere Lösungen aufweist und die Recheneinheit zumindest eine nichtzutreffende Lösung ausschließt. Vorzugsweise schließt die Recheneinheit alle nichtzutreffenden Lösungen aus.

Ferner wird vorgeschlagen, dass die Handwerkzeugvorrichtung zumindest einen Bewegungssensor aufweist, der eine Bewegungsinformation ermittelt, die die Recheneinheit zur Reduzierung einer Mehrdeutigkeit der Bestimmung der Ausrichtungsinformation in zumindest einem Betriebszustand verwendet, wodurch konstruktiv einfach eine vorteilhafte und insbesondere eindeutige Ausgabe der Ausrichtungsinformation möglich ist. Unter einem "Bewegungssensor" soll insbesondere ein Sensor verstanden werden, der eine Bewegung der Handwerkzeugvorrichtung relativ zu dem Ortungsobjekt, insbesondere senkrecht zu einer Ortungsrichtung, erfasst. Der Sensor ist als ein, dem Fachmann als sinnvoll erscheinender Sensor, vorzugsweise jedoch als ein optischer Sensor, als ein taktiler Sensor und/oder als ein Schallsensor ausgebildet.

Zudem wird vorgeschlagen, dass die Ortungsvorrichtung dazu vorgesehen ist, durch Ortungen in unterschiedliche Seitenabstrahlrichtung eine Verlaufsinformation des länglichen Ortungsobjekts zu bestimmen, wodurch auf bewegliche Teile verzichtet werden kann. Unter "in unterschiedlichen Seitenabstrahlrichtungen" soll in diesem Zusammenhang insbesondere verstanden werden, dass die Ortungsvorrichtung mehrere Ortungen in unterschiedlichen Ortungsrichtungen durchführt. Vorzugsweise steuert die Ortungsvorrichtung die Ortungsantenne unterschiedlich an, wodurch das Ortungssignal in unterschiedlichen Ortungsrichtungen ausgesendet wird. Alternativ oder zusätzlich könnte die Ortungsvorrichtung die Ortungsantenne mechanisch bewegen. Unter einer "Verlaufsinformation" soll insbesondere eine Information verstanden werden, die angibt, ob sich das Ortungsobjekt in diese Richtung erstreckt.

Weiterhin wird vorgeschlagen, dass die Recheneinheit dazu vorgesehen ist, eine Mehrdeutigkeit der Bestimmung der Ausrichtungsinformation mittels der Verlaufsinformation zumindest zu reduzieren, wodurch mit einer einfachen Berechnung eine vorteilhafte und insbesondere eindeutige Ausgabe der Ausrichtungsinformation möglich ist.

Des Weiteren geht die Erfindung aus von einem Handortungsgerät mit einer erfindungsgemäßen Handwerkzeugvorrichtung. Unter einem "Handortungsgerät" soll insbesondere ein Gerät verstanden werden, das dazu vorgesehen ist, von einem Bediener mit der Hand an einem Werkstück entlanggeführt, in dem Werkstück verdeckt angeordnete Bauelemente, beispielsweise Stromleitungen, Wasserrohre und/oder Holzbalken, zu erkennen und vorteilhaft eine Position, insbesondere eine Entfernung von dem Gerät, zu ermitteln. Vorzugsweise weist das Handortungsgerät ein Gerätegehäuse auf, das zur Führung von einem Bediener greifbar ausgebildet ist.

Des Weiteren geht die Erfindung aus von einem Handwerkzeug mit einer erfindungsgemäßen Handwerkzeugvorrichtung, wodurch besonders einfach vor einem Arbeitsvorgang ein Werkstück auf Ortungsobjekte überprüft werden kann. Insbesondere soll unter einem "Handwerkzeug" ein, dem Fachmann als sinnvoll erscheinendes Werkzeug, vorteilhaft jedoch eine Bohrmaschine, ein Bohrhammer, ein Schlaghammer, eine Säge, ein Hobel, ein Schrauber, eine Fräse, ein Schleifer, ein Winkelschleifer, ein Gartengerät und/oder ein Multifunktionswerkzeug, verstanden werden. Vorzugsweise weist das Handwerkzeug ein Gerätegehäuse auf, das zur Führung von einem Bediener greifbar ausgebildet ist.

Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1    ein Handortungsgerät mit einer erfindungsgemäßen Handwerkzeugvorrichtung und ein in einem Werkstück verdeckt angeordnetes Ortungsobjekt,

Fig. 2    die Handwerkzeugvorrichtung mit einer Recheneinheit und einer Ortungsvorrichtung aus Figur 1 in einer schematischen Darstellung,

Fig. 3    eine Ortungsantenne der Ortungsvorrichtung aus Figur 2 in einer perspektivischen Darstellung,

Fig. 4    einen Verlauf einer Signalstärke und einer Phase eines reflektierten, vertikal gesendeten Ortungssignals in Abhängigkeit von einem Winkel zwischen dem Handortungsgerät und dem Ortungsobjekt aus Figur 1,

Fig. 5    einen Verlauf einer Signalstärke und einer Phase eines reflektierten horizontal gesendeten Ortungssignals in Abhängigkeit von einem Winkel zwischen dem Handortungsgerät und dem Ortungsobjekt aus Figur 1 und

Fig. 6    einen normierten Verlauf eines Wertes und einer Phase von aus dem Ortungssignal ermittelten Streuparametern.

Beschreibung des Ausführungsbeispiels

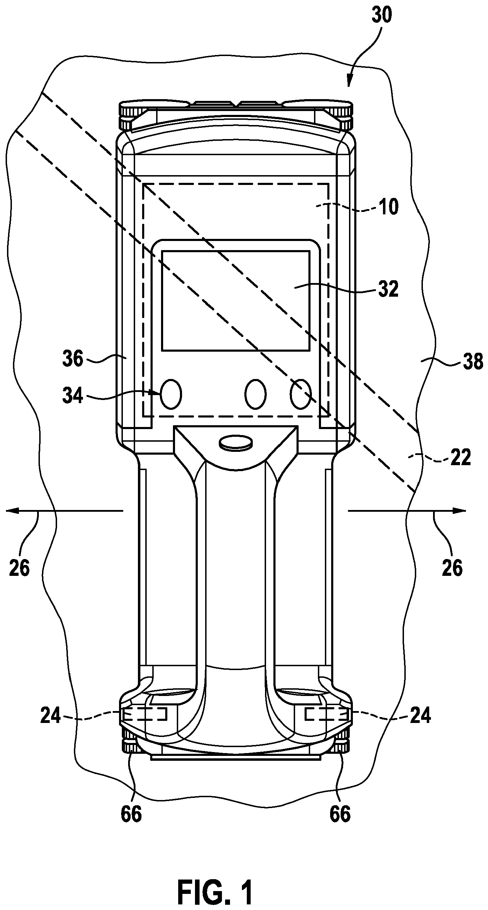

Figur 1 zeigt ein Handortungsgerät 30 mit einer Handwerkzeugvorrichtung 10, einer Anzeigeeinheit 32, einer Eingabeeinheit 34 und einem Gerätegehäuse 36. Der Bediener führt das Handortungsgerät 30 bei einem Betrieb an dem Gerätegehäuse 36 über ein Werkstück 38. Die Handwerkzeugvorrichtung 10 sendet dabei ein Ortungssignal durch eine der Anzeigeeinheit 32 abgewandte Seite des Gerätegehäuses 36 in das Werkstück 38. Das Werkstück 38 ist hier als Teil einer Wand ausgebildet. Bei einem Ortungsvorgang reflektiert ein in dem Werkstück 38 verdeckt angeordnetes Ortungsobjekt 22 einen Teil des Ortungssignals. Das dargestellte Ortungsobjekt 22 ist als eine in innerhalb dem Werkstück 38 verlaufende Wasserleitung ausgebildet. Es ist somit ein als ein längliches Ortungsobjekt 22 ausgebildet. Die Handwerkzeugvorrichtung 10 empfängt einen Teil des Ortungssignals und bestimmt daraus zumindest eine Information über das Ortungsobjekt 22. In diesem Ausführungsbeispiel bestimmt die Handwerkzeugvorrichtung 10, ob das Ortungsobjekt 22 in einer Hauptstrahlrichtung 40 vor einer Ortungsantenne 42 der Ortungsvorrichtung 14 angeordnet ist und eine Tiefe, in der das Ortungsobjekt 22 angeordnet ist. Wenn das Ortungsobjekt 22 länglich ausgebildet bestimmt die Handwerkzeugvorrichtung 10 zudem eine Ausrichtungsinformation 20 des Ortungsobjekts 22.

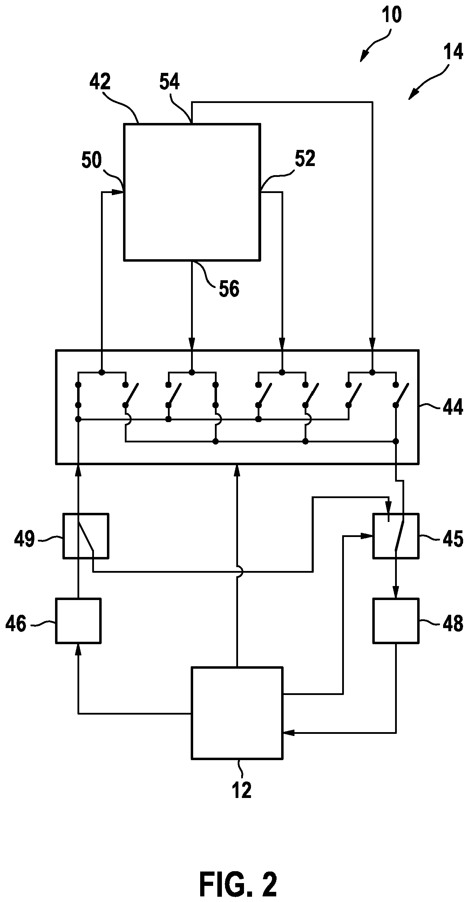

Die in Figur 2 näher dargestellte Handwerkzeugvorrichtung 10 umfasst eine Recheneinheit 12 und eine Ortungsvorrichtung 14. Die Ortungsvorrichtung 14 weist die Ortungsantenne 42, einen ersten Antennenumschalter 44, einen zweiten Antennenumschalter 45, einen Signalgenerator 46, einen ersten Analog-Digital-Wandler 48 und eine Antennenweiche 49 auf. Der Signalgenerator 46 erzeugt das Ortungssignal. Das Ortungssignal weist eine Bandbreite von 2 GHz und eine Mittenfrequenz von 3 GHz auf. Die Recheneinheit 12 steuert die Erzeugung des Ortungssignals. Alternativ oder zusätzlich könnte ein Signalgenerator ein Ortungssignal insbesondere über einen Antennenumschalter an eine Recheneinheit übertragen, die das ungesendete Ortungssignal quantisiert. Die Ortungsantenne 42 weist vier Speisepunkte 50, 52, 54, 56 auf. Die Antennenweiche 49 ist zwischen dem Signalgenerator 46 und einem der Antennenumschalter 44 angeordnet. Sie ist als ein Richtkoppler ausgebildet. Sie leitet ein von dem Signalgenerator 46 kommendes Ortungssignal an den Antennenumschalter 44 weiter. Des Weiteren leitet sie einen von dem Antennenumschalter 44 kommenden rücklaufenden Anteil des Ortungssignals in Richtung des Analog-Digital-Wandlers 48 weiter. Der Antennenumschalter 44 leitet das Ortungssignal zu einem einzelnen der Speisepunkte 50, 52, 54, 56 der Ortungsantenne 42 weiter. Die Recheneinheit 12 steuert die Antennenumschalter 44, 45. Somit ist die Ortungsvorrichtung 14 dazu vorgesehen, einen einzelnen der Speisepunkte 50, 52, 54, 56 anzuregen. Die Antennenumschalter 44, 45 leitet das Ortungssignal nacheinander zu allen Speisepunkten 50, 52, 54, 56. Dargestellt ist, dass der Antennenumschalter 44 das Ortungssignal zu einem ersten der Speisepunkte 50 weiterleitet. Nicht näher dargestellt sind Filter, Verstärker, Mischer und Modulatoren der Ortungsvorrichtung 14. Alternativ könnte eine Ortungsvorrichtung zwei Empfänger, insbesondere mit zwei Analog-Digital-Wandlern, aufweisen. Dabei könnte ein Empfänger ein zu einem gespeisten Speisepunkt reflektiertes Ortungssignal empfangen und ein Empfänger ein zu einem ungespeisten Speisepunkt reflektiertes Ortungssignal empfangen. Dadurch kann auf den zweiten Antennenumschalter 45 verzichtet werden.

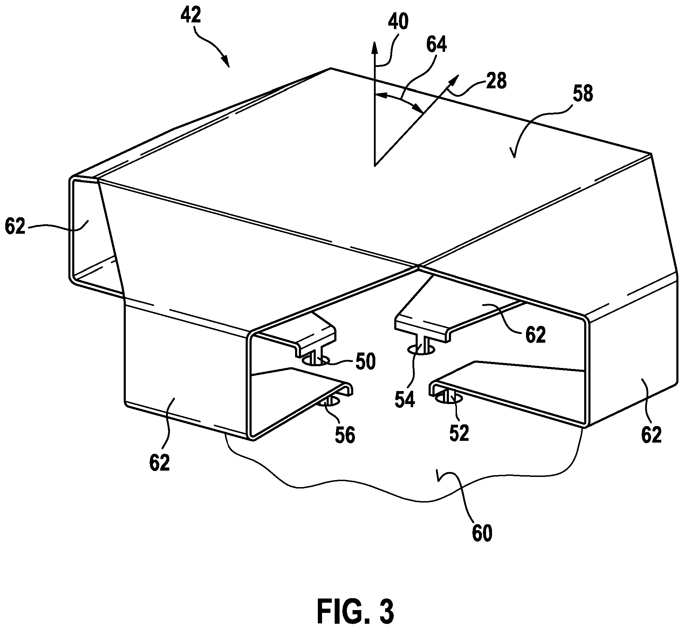

Figur 3 zeigt die Ortungsantenne 42 der Handwerkzeugvorrichtung 10. Die Ortungsantenne 42 ist als eine LCR-Antenne ausgebildet. Die Ortungsantenne 42 umfasst vier Speisepunkte 50, 52, 54, 56, eine Strahlerfläche 58, eine Massefläche 60 und vier Anpassmittel 62. Die Massefläche 60 reflektiert einen von der Strahlerfläche 58 in ihre Richtung gesendeten Anteil des Ortungssignals in Richtung der Hauptstrahlrichtung 40. Die Strahlerfläche 58 sendet und empfängt bei einem Betrieb das Ortungssignal in der Hauptstrahlrichtung 40. Sie ist quadratisch geformt. Die Speisepunkte 50, 52, 54, 56 regen über die Anpassmittel 62 die Strahlerfläche 58 zur Aussendung des Ortungssignals an. Dabei transformieren die Anpassmittel 62 einen Wellenwiderstand der Speisepunkte 50, 52, 54, 56, hier 50 Ohm, zu einem Wellenwiderstand der Strahlerfläche 58, der hier kleiner als 10 Ohm ist. Die Anpassmittel 62 verlaufen trapezförmig von den Speisepunkten 50, 52, 54, 56 zu der Strahlerfläche 58. Die Strahlerfläche 58 und die Anpassmittel 62 werden von einer einstückig ausgebildeten leitenden Fläche gebildet. Dabei verjüngen sich die Anpassmittel 62 von der Strahlerfläche 58 in Richtung der Speisepunkte 50, 52, 54, 56. Die Speisepunkte 50, 52, 54, 56 sind auf einer von der Massefläche 60 aufgespannten Ebene angeordnet. Die Massefläche 60 erstreckt sich bei den Speisepunkten 50, 52, 54, 56 parallel zu der Strahlerfläche 58. Eine weitere Ausgestaltung der Ortungsantenne 42 kann insbesondere der Druckschrift DE 10 2008 041 651 A1 entnommen werden.

Die Ortungsantenne 42 sendet bei einer Speisung eines der Speisepunkte 50, 52, 54, 56 zwei orthogonale Polarisationsrichtungen 16, 18 des Ortungssignals gleichzeitig. Gleichzeitig empfängt die Ortungsantenne 42 einen von dem Ortungsobjekt 22 reflektierten Anteil des Ortungssignals. Die Ortungsantenne 42 gibt an jedem der vier Speisepunkte 50, 52, 54, 56 einen empfangenen Teil des reflektierten Ortungssignals aus. Jeder von den Speisepunkten 50, 52, 54, 56 ausgegebene Teil des reflektierten Ortungssignals umfasst entsprechend einer Antennencharakteristik der Ortungsantenne 42 beide Polarisationsrichtungen 16, 18 des Ortungssignals. Die vier Speisepunkte 50, 52, 54, 56 der Ortungsantenne 42 werden nacheinander einzeln angeregt. Bei jeder Anregung eines der Speisepunkte 50, 52, 54, 56 leiten die Antennenumschalter 44, 45 die von der Ortungsantenne 42 empfangenen und von den Speisepunkte 50, 52, 54, 56 ausgegebenen Anteile des Ortungssignals nacheinander an den Analog-Digital-Wandler 48 weiter. Ein empfangener Anteil des Speisepunktes 50, der gerade sendet, wird dazu über die Antennenweiche 49 vor dem Signalgenerator 46 ausgekoppelt. Der Analog-Digital-Wandler 48 quantisiert die von den vier Speisepunkten 50, 52, 54, 56 kommenden empfangenen Teil des Ortungssignals nacheinander.

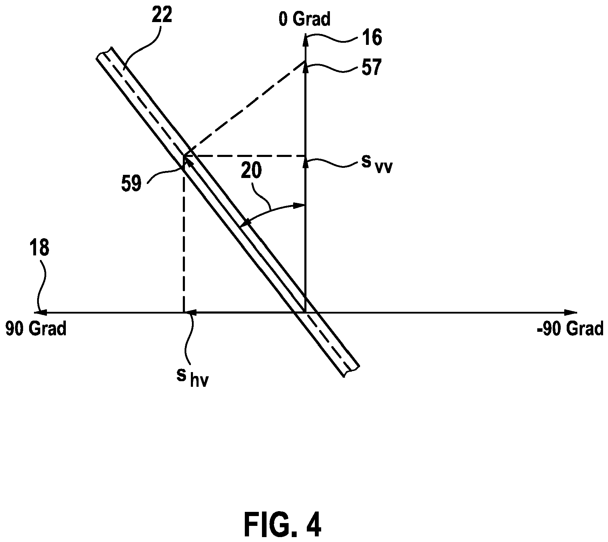

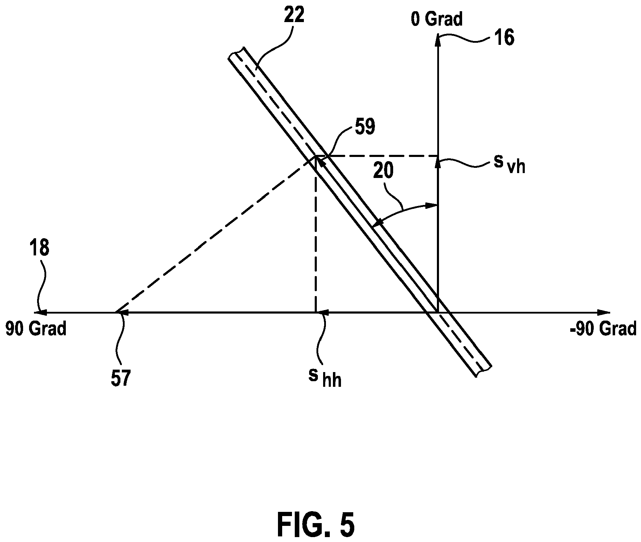

Die Recheneinheit 12 ist dazu vorgesehen, eine Ausrichtungsinformation 20 des länglichen, verdeckt angeordneten Ortungsobjekts 22 mittels der insbesondere in Figur 4 und Figur 5 dargestellten zwei empfangenen Polarisationsrichtungen 16, 18 des Ortungssignals zu bestimmen. Dazu berechnet die Recheneinheit 12 aus dem empfangenen Teil 59 des Ortungssignals in Abhängigkeit von dem gesendeten Ortungssignal 57 eine Rückstreumatrix des Ortungsobjekts 22. Die Rückstreumatrix beschreibt eine Reflexion eines beliebig polarisierten Ortungssignals an dem Ortungsobjekt 22. Beispielsweise kann die Recheneinheit 12 ein Zirkularstreuparameter $s_{circ}$ einer Reflexion eines zirkular ausgesendeten Ortungssignals an dem Ortungsobjekts 22 berechnen. Die Recheneinheit 12 bestimmt zur Ermittlung der Ausrichtungsinformation 20 zwei Kreuzpolarisationsparameter $s_{hv}$, $s_{vh}$ und zwei Copolarisationsparameter $S_{vv}$, $S_{hh}$ des Ortungsobjekts 22. Ein erster Kreuzpolarisationsparameter $s_{hv}$ beschreibt, welcher Anteil eines mit der ersten Polarisationsrichtung 18 gesendeten Ortungssignals von dem Ortungsobjekt 22 mit der zweiten Polarisationsrichtung 18 reflektiert wird. Ein zweiter der Kreuzpolarisationsparameter $s_{vh}$ beschreibt, welcher Anteil eines mit der zweiten Polarisationsrichtung 18 gesendeten Ortungssignals mit der ersten Polarisationsrichtung 16 von dem Ortungsobjekt 22 reflektiert wird. Ein erster der Copolarisationsparameter $s_{vv}$ beschreibt, welcher Anteil eines mit der ersten Polarisationsrichtung 16 gesendeten Ortungssignals mit der ersten Polarisationsrichtung 16 von dem Ortungsobjekt 22 reflektiert wird. Ein zweiter der Copolarisationsparameter $s_{hh}$ beschreibt, welcher Anteil eines mit der zweiten Polarisationsrichtung 18 gesendeten Ortungssignals mit der zweiten Polarisationsrichtung 18 von dem Ortungsobjekt 22 reflektiert wird. Die Polarisationsrichtungen 16, 18 sind als lineare Polarisationsrichtungen ausgebildet. Die Polarisationsrichtungen 16, 18 sind orthogonal zueinander ausgerichtet.

Die Recheneinheit 12 bestimmt ein Summenkreuzpolarisationsparameter $s_{xpol}$ aus den Kreuzpolarisationsparametern $s_{hv}$, $s_{vh}$ der zwei orthogonalen Polarisationsrichtungen 16, 18 des reflektierten Ortungssignals. Die Recheneinheit 12 addiert dazu die Kreuzpolarisationsparametern $s_{hv}$, $s_{vh}$ komplex. Der Summenkreuzpolarisationsparameter $s_{xpol}$ beschreibt ein, durch die Reflektion verursachtes Übersprechen, von den beiden Polarisationsrichtungen 16, 18 zu der jeweils anderen der Polarisationsrichtungen 16, 18. Die Recheneinheit 12 ist dazu vorgesehen, die Ausrichtungsinformation 20 aus den Copolarisationsparametern $S_{vv}$, $s_{hh}$ zu bestimmen. Dazu bestimmt die Recheneinheit 12 einen winkelverschobenen Summenkreuzpolarisationsparameter $s_{xpol45}$ aus Copolarisationsparametern $S_{vv}$, $s_{hh}$ der zwei Polarisationsrichtungen 16, 18 des reflektierten Ortungssignals. Die Recheneinheit 12 subtrahiert dazu den zweiten Copolarisationsparameter $s_{vh}$ von dem ersten Copolarisationsparameter $s_{vv}$ komplex.

Die Recheneinheit 12 bestimmt die Ausrichtinformation $\Phi$ 20 in einem Wertebereich zwischen -90 Grad und 90 Grad nach folgender Formel:

$$\Phi = \frac{1}{2}\arctan\left(\frac{\left|s_{xpol}\right|}{\left|s_{xpol45}\right|}\right)$$

Die Recheneinheit 12 bestimmt die Ausrichtungsinformation 20 somit aus einem Betrag des Summenkreuzpolarisationsparameters $s_{xpol}$. Zudem bestimmt die Recheneinheit 12 die Ausrichtungsinformation 20 somit aus einem Betrag des winkelverschobenen Summenkreuzpolarisationsparameter $s_{xpol45}$. Dadurch kann eine durch Messungenauigkeiten verursachter komplexer Wert des Quotienten $s_{xpol}$ / $s_{xpol45}$ vermieden werden. Die Recheneinheit 12 bestimmt die Ausrichtungsinformation 20 mittels einer Winkelfunktion aus dem Summenkreuzpolarisationsparameter $s_{xpol}$ und dem winkelverschobenen Summenkreuzpolarisationsparameter $s_{xpol45}$. Die Winkelfunktion ist eine Arcustangens-Funktion.

Durch die Bildung des Betrags bei der Berechnung der Ausrichtungsinformation 20 weist die Ausrichtungsinformation 20 eine vierfache Mehrdeutigkeit auf. Zur Reduzierung der Mehrdeutigkeiten wird zuerst eine Phase von dem Summenkreuzpolarisationsparameter $s_{xpol}$ und dem winkelverschobenen Summenkreuzpolarisationsparameter $s_{xpol45}$ verglichen. Wenn der Summenkreuzpolarisationsparameter $s_{xpol}$ und der winkelverschobene Summenkreuzpolarisationsparameter $s_{xpol45}$ eine gleiche Phase aufweisen, liegt ein Wert der Ausrichtungsinformation 20 in einem Wertebereich zwischen -90 Grad und -45 Grad oder 0 Grad und 45 Grad. Wenn der Summenkreuzpolarisationsparameter $s_{xpol}$ und der winkelverschobene Summenkreuzpolarisationsparameter $s_{xpol45}$ einen Phasenunterschied von 180 Grad aufweisen, liegt ein Wert der Ausrichtungsinformation 20 in einem Wertebereich zwischen -45 Grad und -0 Grad oder 45 Grad und 90 Grad.

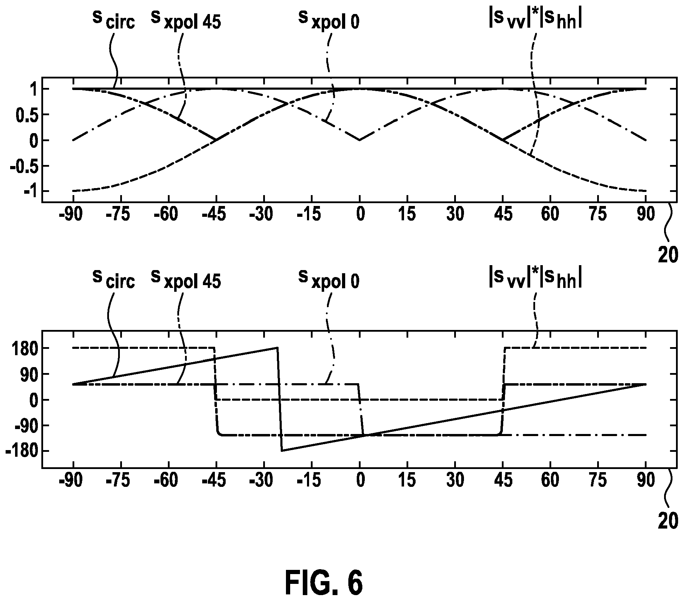

Zur Lösung einer verbliebenen Zweideutigkeit der Ausrichtungsinformation 20 weist die Handwerkzeugvorrichtung 10 vier Mechanismen auf. Alternativ könnte eine Handwerkzeugvorrichtung 10 eine, zwei oder drei der Mechanismen aufweisen. In der Figur 6 ist oben ein normierter Verlauf eines Wertes und unten eine Phase der aus dem empfangenen Ortungssignal 59 ermittelten Streuparameter dargestellt.

1. Mechanismus

Die Recheneinheit 12 löst die Mehrdeutigkeit der Bestimmung der Ausrichtungsinformation 20 mittels der Copolarisationsparameter $s_{vv}$, $s_{hh}$. Zuerst zieht die Recheneinheit 12 einen Symmetrieparameter $s_{sym}$ von den Copolarisationsparametern $s_{vv}$, $s_{hh}$ ab. Der Symmetrieparameter $s_{sym}$ beschreibt einen von symmetrischen Objekten, beispielsweise einer Oberfläche des Werkstücks 38, reflektierten Anteil des Ortungssignals. Den Symmetrieparameter $s_{sym}$ bestimmt die Recheneinheit 12, durch eine Messung an einer Stelle des Werkstücks 38 ohne einem länglichen Ortungsobjekt, durch eine Bestimmung einer mittleren Reflektion an verschiedenen Stellen des Werkstücks 38, durch eine Kreuzkorrelation von dem ersten Copolarisationsparameter $s_{vv}$ und dem zweiten Copolarisationsparameter $s_{hh}$ und/oder durch eine synthetische Hintergrundbestimmung durch Bestimmung einer Dielektrizitätskonstante des Werkstücks 38. Dabei darf ein Messfehler bei Bestimmung des Symmetrieparameters $s_{sym}$ maximal halb so groß wie ein berechneter Zirkularstreuparameter $s_{circ}$ einer Reflexion eines zirkular polarisierten Ortungssignals an dem Ortungsobjekt 22 sein.

Die Recheneinheit 12 vergleicht einen Betrag des ersten Copolarisationsparameters $s_{vv}$ mit einem Betrag des zweiten Copolarisationsparameters $s_{hh}$. Wenn der erste Copolarisationsparameter $s_{vv}$ größer als der zweite Copolarisationsparameter $s_{hh}$ ist, liegt ein Wert der Ausrichtungsinformation 20 in einem Bereich zwischen -45 bis 45 Grad. Wenn der erste Copolarisationsparameter $s_{vv}$ kleiner als der zweite Copolarisationsparameter $s_{hh}$ ist, liegt ein Wert der Ausrichtungsinformation 20 in einem Bereich zwischen -90 und -45 Grad oder 45 Grad und 90 Grad.

2. Mechanismus

Des Weiteren löst die Recheneinheit 12 die Mehrdeutigkeit, indem sie einen Winkelfaktor oC in Abhängigkeit von den Copolarisationsparametern $s_{vv}$, $s_{hh}$ und dem Symmetrieparameter $s_{sym}$ bestimmt:

$$\sigma C = s_{vv} + s_{hh} - 2s_{sym}$$

Des Weiteren bestimmt die Recheneinheit 12 einen geschätzten Winkelfaktor $\sigma C_{geschätzt}$ aus einer geschätzten Ausrichtinformation $\Phi_{geschätzt}$. In diesem Ausführungsbeispiel wird die geschätzte Ausrichtinformation $\Phi_{geschätzt}$ auf eine der Mehrdeutigkeiten im Bereich -45 Grad bis 45 Grad geschätzt.

$$\sigma C_{geschätzt} = \frac{s_{xpol}}{\sin\left(2\Phi_{geschätzt}\right)} = \frac{s_{xpol45}}{\cos\left(2\Phi_{geschätzt}\right)}$$

Dabei wird der Ausdruck "mit einem betragsmäßig größeren Nenner" verwendet. Wenn der Winkelfaktor $\sigma C$ und der geschätzte Winkelfaktor $\sigma C_{geschätzt}$ eine gleiche Phase aufweisen, wurde $\Phi$ richtig geschätzt. Sind die Phase des Winkelfaktors $\sigma C$ und des geschätzten Winkelfaktors $\sigma C_{geschätzt}$ unterschiedlich, wurde $\Phi$ falsch geschätzt. In diesem Fall liegt die Ausrichtinformation in einem Bereich von -90 Grad bis -45 Grad oder im Bereich von 45 Grad bis 90 Grad.

3. Mechanismus

Die Handwerkzeugvorrichtung 10 weist einen Bewegungssensor 24 auf. Der Bewegungssensor 24 ist als ein mit Rollen 66 verbundener Drehsensor ausgebildet. Der Bewegungssensor 24 ermittelt zumindest eine Bewegungsinformation 26 der Handwerkzeugvorrichtung 10 relativ zu dem Werkstück 38. Hier bestimmt der Bewegungssensor 24 eine Bewegungsinformation 26 in Richtung -90 Grad und in Richtung 90 Grad. Des Weiteren könnte ein Bewegungssensor eine Bewegung in Richtung 0 Grad erfassen. Bleibt ein berechneter Zirkularstreuparameter $s_{circ}$ bei einer Bewegung in Richtung -90 Grad oder 90 Grad im Wesentlich konstant, so liegt die Ausrichtinformation 20 etwa bei -90 Grad oder 90 Grad. Wenn sich der berechnete Zirkularstreuparameter $s_{circ}$ bei der Bewegung verändert, wird der Bediener mittels der Anzeigeeinheit 32 aufgefordert das Handortungsgerät 30 um eine achtel Umdrehung zu drehen, und das Handortungsgerät 30 erneut zu bewegen.

4. Mechanismus

Wie in der Figur 3 dargestellt, strahlt die Ortungsantenne 42 das Ortungssignal bei einer Anregung der Ortungsantenne 42 über einen einzelnen der Speisepunkte 50, 52, 54, 56 in eine von der Hauptstrahlrichtung 40 abweichende Seitenabstrahlrichtung 28 ab. Ein Winkel 64 zwischen der Hauptstrahlrichtung 40 und der Seitenabstrahlrichtung 28 beträgt etwa 40 Grad. In Figur 3 ist eine Seitenabstrahlrichtung 28 bei einer Anregung des ersten Speisepunkts 50 dargestellt. Ein in der Seitenabstrahlrichtung 28 angeordnetes Ortungsobjekt 22 reflektiert das über den entsprechenden Speisepunkt 50 angeregte Ortungssignal stärker als ein in der Hauptstrahlrichtung 40 angeordnetes Ortungsobjekt 22. Somit ist die Ortungsvorrichtung 14 dazu vorgesehen, durch Ortungen in unterschiedliche Seitenabstrahlrichtungen 28 eine Verlaufsinformation des länglichen Ortungsobjekts 22 zu bestimmen. Die Recheneinheit 12 reduziert eine Mehrdeutigkeit der Bestimmung der Ausrichtungsinformation 20 mittels der Verlaufsinformation.

**Patentansprüche**

1. Handwerkzeugvorrichtung zur Ortung eines Ortungsobjekts (22) mit einer Recheneinheit (12) und zumindest einer Ortungsvorrichtung (14), die dazu vorgesehen ist, zwei orthogonale Polarisationsrichtungen (16, 18) wenigstens eines reflektierten Ortungssignals zumindest zu empfangen, **dadurch gekennzeichnet, dass** die Recheneinheit (12) dazu vorgesehen ist, eine Ausrichtungsinformation (20) eines länglichen, insbesondere verdeckt angeordneten Ortungsobjekts (22) mittels der zwei empfangenen Polarisationsrichtungen (16, 18) aus zumindest einem Kreuzpolarisationsparameter ($s_{hv}$, $s_{vh}$) und zumindest einem Copolarisationsparameter ($S_{vv}$, $S_{hh}$) des reflektierten Ortungssignals zu bestimmen.

2. Handwerkzeugvorrichtung nach Anspruch 1, **dadurch gekennzeichnet, dass** die Recheneinheit (12) dazu vorgesehen ist, ein Summenkreuzpolarisationsparameter ($s_{xpol}$) aus Kreuzpolarisationsparametern ($s_{hv}$, $s_{vh}$) der zwei orthogonalen Polarisationsrichtungen (16, 18) des reflektierten Ortungssignals zu bestimmen.

3. Handwerkzeugvorrichtung nach Anspruch 2, **dadurch gekennzeichnet, dass** die Recheneinheit (12) dazu vorgesehen ist, einen winkelverschobenen Summenkreuzpolarisationsparameter ($s_{xpol45}$) aus den Copolarisationsparametern ($S_{vv}$, $S_{hh}$) der zwei Polarisationsrichtungen (16, 18) des reflektierten Ortungssignals zu bestimmen.

4. Handwerkzeugvorrichtung nach Anspruch 2 und 3, **dadurch gekennzeichnet, dass** die Recheneinheit (12) dazu vorgesehen ist, die Ausrichtungsinformation (20) aus einem Betrag des Summenkreuzpolarisationsparameter ($S_{xpol}$) und einem Betrag des winkelverschobenen Summenkreuzpolarisationsparameter ($S_{xpool45}$) zu bestimmen.

5. Handwerkzeugvorrichtung nach Anspruch 4, **dadurch gekennzeichnet, dass** die Recheneinheit (12) dazu vorgesehen ist, die Ausrichtungsinformation (20) mittels einer Winkelfunktion aus dem Summenkreuzpolarisationsparameter ($S_{xpol}$) und dem winkelverschobenen Summenkreuzpolarisationsparameter ($S_{xpol45}$) zu bestimmen.

6. Handwerkzeugvorrichtung nach einem der vorhergehenden Ansprüche, **dadurch gekennzeichnet, dass** die Recheneinheit (12) dazu vorgesehen ist, eine Mehrdeutigkeit der Bestimmung der Ausrichtungsinformation (20) mittels wenigstens einem Copolarisationsparameter ($S_{vv}$, $S_{hh}$) zumindest zu reduzieren.

7. Handwerkzeugvorrichtung nach einem der vorhergehenden Ansprüche, **gekennzeichnet durch** zumindest einem Bewegungssensor, (24) der zumindest eine Bewegungsinformation (26) ermittelt, die die Recheneinheit (12) zur Reduzierung einer Mehrdeutigkeit der Bestimmung der Ausrichtungsinformation (20) in zumindest einem Betriebszustand verwendet.

8. Handwerkzeugvorrichtung nach einem der vorhergehenden Ansprüche, **dadurch gekennzeichnet, dass** die Ortungsvorrichtung (14) dazu vorgesehen ist, durch Ortungen in unterschiedliche Seitenabstrahlrichtungen (28) eine Verlaufsinformation des länglichen Ortungsobjekts (22) zu bestimmen.

9. Handwerkzeugvorrichtung nach Anspruch 8, **dadurch gekennzeichnet, dass** die Recheneinheit (12) dazu vorgesehen ist, eine Mehrdeutigkeit der Bestimmung der Ausrichtungsinformation (20) mittels der Verlaufsinformation zumindest zu reduzieren.

10. Handortungsgerät mit einer Handwerkzeugvorrichtung (10) nach einem der vorhergehenden Ansprüche.

11. Handwerkzeug mit einer Handwerkzeugvorrichtung (10) nach einem der Ansprüche 1 bis 9.

12. Verfahren mit einer Handwerkzeugvorrichtung (10) nach einem der Ansprüche 1 bis 9, die eine Ortungsvorrichtung (14), die bei einer Ortung zwei orthogonale Polarisationsrichtungen (16, 18) wenigstens eines Ortungssignals zumindest empfängt, und eine Recheneinheit (12), die eine Ausrichtungsinformation (20) eines länglichen, insbesondere verdeckt angeordneten Ortungsobjekts (22) mittels der zwei Polarisationsrichtungen (16. 18) bestimmt, aufweist.

## Claims

1. Handheld tool apparatus for locating a locatable object (22) and having a computation unit (12) and at least one locating apparatus (14) that is provided for the purpose of at least receiving two orthogonal polarization directions (16, 18) for at least one reflected locating signal, **characterized in that** the computation unit (12) is provided for the purpose of determining a piece of orientation information (20) for an elongate locatable object (22), particularly in a concealed arrangement, by means of the two received polarization directions (16, 18) from at least one cross-polarization parameter ($S_{hu}$, $S_{vh}$) and at least one copolarization parameter ($S_{vv}$, $S_{hh}$) of the reflected locating signal.

2. Handheld tool apparatus according to Claim 1, **characterized in that** the computation unit (12) is provided for the purpose of determining a total cross-polarization parameter ($s_{xpol}$) from cross-polarization parameters ($s_{hv}$, $s_{vh}$) for the two orthogonal polarization directions (16, 18) of the reflected locating signal.

3. Handheld tool apparatus according to Claim 2, **characterized in that** the computation unit (12) is provided for the purpose of determining an angle-shifted total cross-polarization parameter ($s_{xpol45}$) from the copolarization parameters ($S_{vv}$, $S_{hh}$) of the two polarization directions (16, 18) of the reflected locating signal.

4. Handheld tool apparatus according to Claims 2 and 3, **characterized in that** the computation unit (12) is provided for the purpose of determining the orientation information (20) from an absolute value for the total cross-polarization parameter ($S_{xpol}$) and an absolute value for the angle-shifted total cross-polarization parameter ($S_{xpol45}$).

5. Handheld tool apparatus according to Claim 4, **characterized in that** the computation unit (12) is provided for the purpose of determining the orientation information (20) by means of an angle function from the total cross-polarization parameter ($S_{xpol}$) and the angle-shifted total cross-polarization parameter ($S_{xpol45}$).

6. Handheld tool apparatus according to one of the preceding claims, **characterized in that** the computation unit (12) is provided for the purpose of at least reducing an ambiguity for the determination of the orientation information (20) by means of at least one copolarization parameter ($S_{vv}$, $S_{hh}$).

7. Handheld tool apparatus according to one of the preceding claims, **characterized by** at least one motion sensor (24) that ascertains at least one piece of motion information (26) that the computation unit (12) uses in order to reduce an ambiguity for the determination of the orientation information (20) in at least one operating state.

8. Handheld tool apparatus according to one of the preceding claims, **characterized in that** the locating apparatus (14) is provided for the purpose of determining a piece of profile information for the elongate locatable object (22) by means of the locating operations in different lateral radiation directions (28).

9. Handheld tool apparatus according to Claim 8, **characterized in that** the computation unit (12) is provided for the purpose of at least reducing an ambiguity for the determination of the orientation information (20) by means of the profile information.

10. Handheld locating appliance having a handheld tool apparatus (10) according to one of the preceding claims.

11. Handheld tool having a handheld tool apparatus (10) according to one of Claims 1 to 9.

12. Method with a handheld tool apparatus (10) according to one of Claims 1 to 9, that has a locating apparatus (14), which at least receives two orthogonal polarization directions (16, 18) for at least one locating signal during a locating operation, and a computation unit (12), which determines a piece of orientation information (20) for an elongate locatable object (22), particularly in a concealed arrangement, by means of the two polarization directions (16, 18).

## Revendications

1. Dispositif d'outillage manuel destiné à la localisation d'un objet de localisation (22), comprenant une unité de calcul (12) et au moins un dispositif de localisation (14), qui est conçu pour au moins recevoir deux directions de polarisation orthogonales (16, 18) d'au moins un signal de localisation réfléchi, **caractérisé en ce que** l'unité de calcul (12) est conçue pour déterminer une information d'orientation (20) d'un objet de localisation (22) allongé, notamment disposé sous abri, au moyen des deux directions de polarisation (16, 18) reçues à partir d'au moins un paramètre de polarisation croisée ($s_{hv}$, $s_{vh}$) et d'au moins un paramètre de copolarisation ($S_{vv}$, $S_{hh}$) du signal

de localisation réfléchi.

**2.** Dispositif d'outillage manuel selon la revendication 1, **caractérisé en ce que** l'unité de calcul (12) est conçue pour déterminer un paramètre de polarisation croisée totale ($s_{xpol}$) à partir des paramètres de polarisation croisée ($s_{hv}$, $s_{vh}$) des deux directions de polarisation orthogonales (16, 18) du signal de localisation réfléchi.

**3.** Dispositif d'outillage manuel selon la revendication 2, **caractérisé en ce que** l'unité de calcul (12) est conçue pour déterminer un paramètre de polarisation croisée totale à décalage angulaire ($s_{xpol45}$) à partir des paramètres de copolarisation ($S_{vv}$, $S_{hh}$) des deux directions de polarisation (16, 18) du signal de localisation réfléchi.

**4.** Dispositif d'outillage manuel selon les revendications 2 et 3, **caractérisé en ce que** l'unité de calcul (12) est conçue pour déterminer l'information d'orientation (20) à partir d'une valeur du paramètre de polarisation croisée totale ($s_{xpol}$) et d'une valeur du paramètre de polarisation croisée totale à décalage angulaire ($S_{xpol45}$).

**5.** Dispositif d'outillage manuel selon la revendication 4, **caractérisé en ce que** l'unité de calcul (12) est conçue pour déterminer l'information d'orientation (20) au moyen d'une fonction trigonométrique du paramètre de polarisation croisée totale ($S_{xpol}$) et du paramètre de polarisation croisée totale à décalage angulaire ($S_{xpol45}$).

**6.** Dispositif d'outillage manuel selon l'une des revendications précédentes, **caractérisé en ce que** l'unité de calcul (12) est conçue pour au moins réduire une ambiguïté de la détermination de l'information d'orientation (20) au moyen d'au moins un paramètre de copolarisation ($S_{vv}$, $S_{hh}$).

**7.** Dispositif d'outillage manuel selon l'une des revendications précédentes, **caractérisé par** au moins un capteur de mouvement (24) qui détermine au moins une information de mouvement (26), laquelle est utilisée par l'unité de calcul (12) pour réduire une ambiguïté de la détermination de l'information d'orientation (20) dans au moins un état de fonctionnement.

**8.** Dispositif d'outillage manuel selon l'une des revendications précédentes, **caractérisé en ce que** le dispositif de localisation (14) est conçu pour déterminer une information de progression de l'objet de localisation (22) allongé par des localisations dans différentes directions de rayonnement latérales (28) différentes.

**9.** Dispositif d'outillage manuel selon la revendication 8, **caractérisé en ce que** l'unité de calcul (12) est conçue pour au moins réduire une ambiguïté de la détermination de l'information d'orientation (20) au moyen de l'information de progression.

**10.** Appareil de localisation manuel comprenant un dispositif d'outillage manuel (10) selon l'une des revendications précédentes.

**11.** Outil manuel comprenant un dispositif d'outillage manuel (10) selon l'une des revendications 1 à 9.

**12.** Procédé avec un dispositif d'outillage manuel (10) selon l'une des revendications 1 à 9, lequel comprend un dispositif de localisation (14) qui, lors d'une localisation, reçoit au moins deux directions de polarisation orthogonales (16, 18) d'au moins un signal de localisation, et une unité de calcul (12), laquelle détermine une information d'orientation (20) d'un objet de localisation (22) allongé, notamment disposé sous abri, au moyen des deux directions de polarisation (16, 18) .

**FIG. 1**

**FIG. 2**

FIG. 3

**FIG. 4**

**FIG. 5**

FIG. 6

**IN DER BESCHREIBUNG AUFGEFÜHRTE DOKUMENTE**

**In der Beschreibung aufgeführte Patentdokumente**

- EP 1717606 A2
- DE 102006061581 A1
- EP 2196829 A2
- DE 102008041651 A1